(19) Europäisches Patentamt
European Patent Office
Office européen des brevets

(11) Numéro de publication: **0 034 091**
**B1**

(12) **FASCICULE DE BREVET EUROPEEN**

(45) Date de publication du fascicule du brevet: **25.04.84**

(51) Int. Cl.[3]: **H 04 N 5/34,** H 04 N 5/197

(21) Numéro de dépôt: **81400161.6**

(22) Date de dépôt: **03.02.81**

(54) **Dispositif anti-éblouissement pour caméra de télévision, applicable notamment au guidage de missile.**

(30) Priorité: **12.02.80 FR 8003048**

(43) Date de publication de la demande:
**19.08.81 Bulletin 81/33**

(45) Mention de la délivrance du brevet:
**25.04.84 Bulletin 84/17**

(84) Etats contractants désignés:
**CH DE GB LI SE**

(56) Documents cités:
**DE - A - 2 824 323**
**FR - A - 2 385 278**
**FR - A - 2 402 985**

**L'ONDE ELECTRIQUE, vol. 52, no. 8, septembre 1972, Paris, FR RODOLFO: "Amélioration de la qualité d'image en prise de vue pour télévision", pages 367-370**

(73) Titulaire: **THOMSON-CSF, 173, Boulevard Haussmann, F-75379 Paris Cedex 08 (FR)**

(72) Inventeur: **Pepin, Christian, THOMSON-CSF SCPI 173, bld Haussmann, F-75360 Paris Cedex 08 (FR)**
Inventeur: **Trahand, Jean-Pierre, THOMSON-CSF SCPI 173, bld Haussmann, F-75360 Paris Cedex 08 (FR)**

(74) Mandataire: **Trocellier, Roger et al, THOMSON-CSF SCPI 173, Bld Haussmann, F-75379 Paris Cedex 08 (FR)**

**EP 0 034 091 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Dispositif anti-eblouissement pour camera de television, applicable notamment au guidage de missile

La présente invention concerne des perfectionnements aux caméras de prise de vues de télévision, plus précisément un dispositif anti-éblouissement destiné à équiper une telle caméra. L'invention s'applique en particulier et avec avantage à des systèmes de guidage de missile par télévision.

Le dispositif est destiné à remédier à l'effet d'éblouissement produit au niveau de la cible du tube de prise de vues d'une caméra TV, par un objet très lumineux présent dans la scène observée. La sensibilité du tube, tel un vidicon, est fonction de la nature de la couche photosensible (rendement quantique, bande spectrale) et de la durée d'accumulation des charges. Lorsqu'un point très brillant focalisé sur le tube produit un éclairement supérieur à la limite de saturation de la cible photoréceptrice, l'image obtenue sur un moniteur TV associé à la caméra est élargie sous forme d'une tache d'autant plus grande que la luminosité du point brillant est élevée comparée à l'éclairement de saturation du tube de prise de vues. C'est l'effet d'éblouissement, ou de » blooming « selon l'appellation anglosaxonne.

Cet effet risque de perturber gravement l'exploitation, car la tache ainsi formée peut masquer des éléments de l'image particulièrement importants pour la mission envisagée. C'est le cas notamment pour des systèmes de guidage de missile par télévision lorsque le point brillant conctitué par le missile vient masquer la cible poursuivie (pour éviter toute confusion, la cible photosensible du tube sera désignée par rétine dans ce qui suit). Le point brillant est constitué par les gaz émis par le propulseur du missile, lequel peut être doté en sus d'un dispositif traceur consitué par une charge pyrotechnique complémentaire. Le guidage du missile par TV peut, part exemple, procéder de la manière suivante: la caméra de TV fournit une image de scène qui est exploitée visuellement par l'opérateur, celui-ci maintenant l'axe de visée optique (centre de l'image TV) pointé sur la cible poursuivie à partir de l'image présentée sur le moniteur; le missile étant rallié par ailleurs par un système de poursuite automatique, on conçoit que l'image élargie du missile va masquer la cible lorqu'il se situe à proximité de la ligne de visée.

Le but de la présente invention est de remédier à cet effet d'éblouissement et aux divers inconvénients pouvant en résulter, de manière à préserver une image exploitable de la scène observée.

Pour ce faire, un dispositif anti-éblouissement selon l'invention procure ce résultat en modifiant localement la sensibilité du tube de prise de vues par diminution du temps d'intégration.

Il est connu par la publication de brevet FR-A-2 385 278 un circuit de contrôle pour un appareil de prise de vue de télévision utilisant un tube cathodique particulier, du type anti-queue de comète. Ces tubes comportent une électrode spécialement agencée et située entre la cathode du canon à électrons et des électrodes conventionelles placées en amont. Le circuit de contrôle associé au tube produit des impulsions de commande des électrodes, dont l'électrode spéciale, de manière à changer la focalisation du faisceau cathodique et accroître ainsi sensiblement le courant durant chaque retour de ligne pour supprimer les effets de queue de comète. Bien qu'il y ait action sur une émission cathodique pendant le retour de balayage horizontal, il n'y a pas de localisation de point brillant ni d'action localisée en ce point par le moyen conjugué du faisceau et des circuits de balayage.

Suivant l'invention, il est proposé de réaliser un dispositif anti-éblouissement pour une caméra de télévision qui comporte un tube de prise de vues délivrant le signal vidéo, des circuits de balayage élaborant des signaux de déflexion en X et en Y du balayage ligne par ligne, un générateur du signal de blocage du faisceau pendant les retours de ligne et trame, et un circuit générateur des signaux de synchronisation ligne et trame, le dispositif anti-éblouissement étant constitué par un circuit bouclé comportant des moyens de détection de la vidéo due à un point brillant, par comparaison du signal vidéo à un seuil déterminé en fonction du niveau de saturation, le résultat de comparaison étant appliqué à des moyens générateurs d'un signal de déblocage appliqué à la grille de contrôle du tube pendant le retour ligne, et produisant ce signal avec une fréquence variable en fonction de la luminosité du point brillant, le dispositif étant caractérisé en ce que le tube étant un tube de prise de vues à canon à électrons comportant une cathode, une grille de contrôle et une grille d'accélération, le résultat de comparaison est appliqué d'autrepart, à des moyens générateurs de signaux de déflexion correspondant à la localisation en X et en Y du point brillant, et des moyens mélangeurs sont prévus pour permettre l'application desdits signaux de déflexion et de déblocage relatifs au point brillant durant des périodes de retour ligne.

Les particularités et avangtages de la présente invention apparaîtront au cours de la description qui suit donné à titre d'exemple, à l'aide des figures annexées qui représentent:

la figure 1, un diagramme général d'une caméra de prise de vues de télévision aménagée avec un dispositif anti-éblouissement conforme à l'invention;

la figure 2, le balayage ligne par ligne de la rétine photosensible et le phénomène d'éblouissement par un point brillant;

la figure 3, des formes d'ondes illustrant le procédé mis en œuvre conformément à l'invention;

la figure 4, un exemple de réalisation du dispositif anti-éblouissement;

la figure 5, des formes d'ondes relatives au fonctionnement du montage selon la figure 4.

Suivant le diagramme général de la figure 1, la caméra comporte un tube de prise de vues qui permet de traduire les informations lumineuses en signaux video SV et des circuits conventionnels de balayage et de synchronisation qui lui sont associés. Le tube du type à accumulation de charges, tel un vidicon par exemple, est représenté par ses éléments essentiels; on distingue l'optique de focalisation 1, une couche photoconductrice 2 formant la rétine, les organes de déflexion 3 (des bobines dans le cas d'une déviation électromagnétique, des plaques dans le cas d'une déviation électrostatique), la grille de contrôle 4 ou wehnelt, ainsi que, la cathode, la grille accélératrice, une électrode de paroi, la grille de champ et des bobines d'alignement et de concentration non référencés.

Les circuits associés ont été représentés par un circuit 6 générateur des signaux de synchronisation ligne SL et trame ST, un circuit 7 générateur du signal de blocage qui supprime le faisceau pendant les intervalles de retour ligne et de retour trame, et un circuit 8 générateur des dents de scie du balayage ligne (balayage horizontal en X) et du balayage de trame ou d'image (balayage vertical en Y). Ces signaux SX et SY sont appliqués aux organes de déflexion 3 après amplification en puissance en 9 pour constituer les tensions de déflexion DX et DY.

Le tube assure une fonction de photodétection en transformant la lumière en charges électriques, une fonction d'accumulation des charges assurée par la rétine et une fonction de lecture de signal par le canon à électrons qui analyse les charges accumulées entre deux balayages successifs. La durée d'intégration des charges en chaque point est égale à la période TI du balayage vertical de trame. Le signal de sortie est préamplifié dans un circuit 10 our constituer le signal video SV transmis à un dispositif d'exploitation annexe 11, tel un moniteur de télévision par exemple.

Conformément à l'invention, le dispositif anti-éblouissement est constitué par un circuit bouclé alimenté par la video SV et qui se referme par le tube de prise de vues. La boucle a été décomposée de manière simplifiée en un circuit comparateur à seuil 20 dont la sortie alimente d'une part, un circuit 21 générateur d'un signal SAP de déblocage du faisceau pendant les intervalles de retour ligne et d'autre part, un circuit 22 de localisation en X, Y du point brillant sur la rétine suivi d'un circuit 23 générateur des signaux de déviation SXP, SYP correspondant à ce point. En outre, des circuits mélangeurs ou d'aiguillage 24 et 25 sont prévus pour transmettre les signaux conventionnels de blocage SB et de balayage SX, SY, et pour appliquer durant des intervalles de retour les signaux d'allumage SAP et de déviation SXP, SYP concernant l'élimination du point brillant détecté.

La figure 2 représente le balayage ligne par ligne de la rétine et notamment d'un point brillant P ayant donné naissance à une tache TS couvrant plusieurs lignes en Y, Lj−1, Lj et Lj+1; XP et YP sont les coordonnées du point brillant, L et T les dimensions de l'image balayée. Le point O de coordonnées nulles est considéré au centre de l'image.

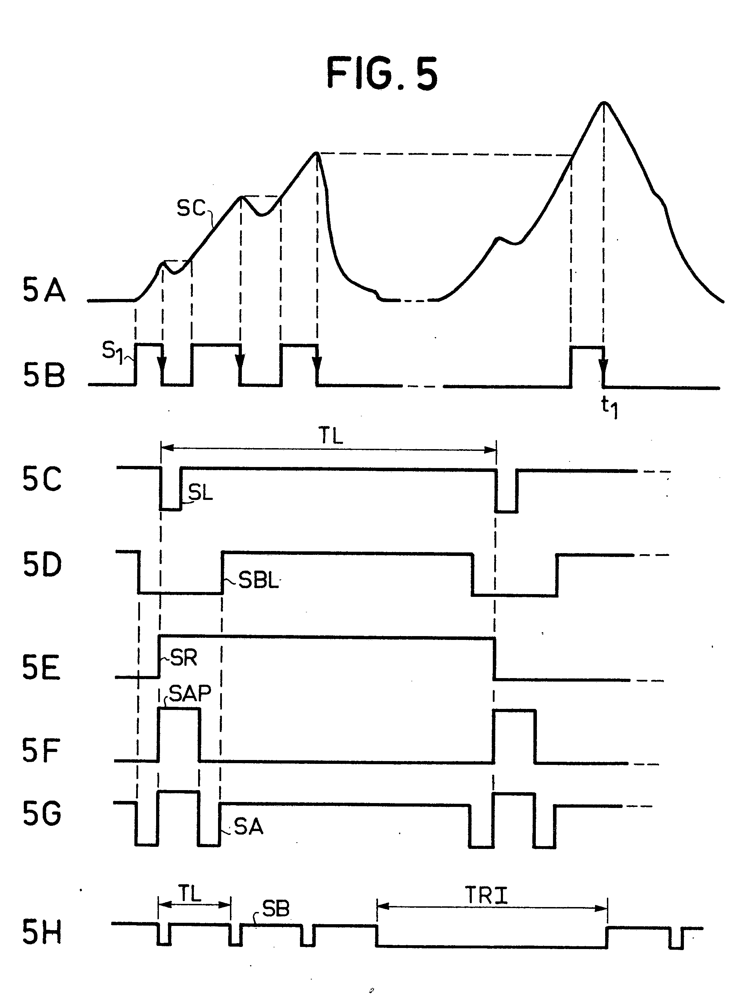

Le procédé utilisé est mis en évidence à l'aide des formes d'ondes de la figure 3. En fonctionnement normal, c'est-à-dire en l'absence de point brillant, les signaux de balayage auraient l'allure conventionnelle indiquée en 3-b pour le balayage de trame et en 3-c pour celui de ligne. La figure 3-a correspond au signal SBT de blocage de trame et la figure 3-d au signal SBL de blocage de ligne; la sortie SB du générateur 7 est constituée par le mélange des deux signaux de blocage SBL et SBT (voir figure 5-h). Le procédé consiste à modifier localement la sensibilité du tube à l'endroit du point brillant, ou sensiblement, en modifiant le balayage du tube pour venir effacer les charges accumulées en ce point et les ramener à une valeur compatible avec un bon fonctionnement. A cet effet on met à profit le temps laissé libre par les intervalles de retour ligne TRL et trame TRI pour venir balayer le point P incriminé et asservir la charge en ce point par l'effet de la boucle. Le point brillant se trouve ainsi balayé à une fréquence supérieure à celle d'analyse du reste de l'image, cette fréquence est contrôlée par la boucle en fonction de l'évolution du phénomène, c'est-à-dire de la luminosité du point brillant. A titre d'exemple, pour un standard d'analyse de 625 lignes 50 Hertz CCIR, la période trame est de 20 ms; en venant balayer le même point à chaque retour ligne (cas représenté sur les figures 3-e à 3-g) on réduit la durée d'intégration en ce point à une période ligne soit 64 µs et la sensibilité est réduite localement dans le rapport 312; de manière généralisée en venant balayer ce point une ligne sur n le taux de réduction de sensibilité locale est 312/n. Les figures 3-e et 3-f montrent les modifications des signaux de balayage en Y et en X respectivement, les niveaux de réflexion VYP et VXP étant fonction des coordonnées du point brillant P; la figure 3-g représente le signal SBL de blocage ligne de la figure 3-d complété par le signal de déblocage SAP du faisceau pour effacer le point brillant lors du retour ligne (il en résulte que l'effacement peut également être produit durant le retour trame).

L'agencement des moyens mis en œuvre pour constituer le dispositif d'anti-éblouissement et son fonctionnement apparaîtront plus clairement dans la description qui suit d'un exemple de réalisation selon la figure 4 et à l'aide des formes d'ondes figure 5. Le premier stade consiste à détecter la présence ou l'apparition d'un point brillant c'est-à-dire la zone TS (figure 2) où l'accumulation des charges devient saturante; ceci est réalisé par le comparateur 20 dont le seuil de comparaison VS est ajusté à un niveau déterminé inférieur au niveau de saturation, de préférence assez proche de cette valeur. La sortie analogique SC du comparateur est appliquée au circuit générateur d'allumage point brillant constitué par les éléments 30 à 35. A chaque ligne traversant la zone TS de niveau supérieur à celui de comparaison, le comparateur délivre un signal SC appliqué à un monostable 30 qui produit une impulsion fine correspondante pour déclencher un compteur 31 initialisé à la fréquence de trame 1/TI, le signal de synchro-trame ST effectuant la remise à zéro du compteur. Ainsi à la fin de chaque balayage d'image, le nombre binaire n1 inscrit dans le compteur 31 correspond à l'étendue en Y de la zone saturée TS et est donc fonction de la luminosité du point brillant. Ce nombre n1 est transféré dans le circuit suivant 32 constitué par une mémoire morte qui lui fait correspondre un autre nombre binaire n2 plus élevé; l'utilité de ce circuit 32 intermédiaire résulte de ce que, par l'action de la boucle, l'effet d'éblouissement va se trouver très réduit sinon éliminé complètement, et le nombre n1 devient très faible correspondant à une ou deux lignes. Le circuit 33 suivant constitue un diviseur programmable sous forme d'un compteur dont la sortie retenue SR (Carry output) est bouclée sur l'entrée charge (Load); il reçoit le signal de synchronisation SL et effectue un comptage à la fréquence ligne en tenant compte de la valeur n2 affichée à l'entrée. Lorsque le comptage atteint 1a valeur n3 correspondant à la capacité du compteur il délivre le signal SR de sortie (figure 5-e). La fréquence du signal SR est fonction de la différence n2—n3, elle croît lorsque cette différence diminue et inversement, permettant de faire varier la fréquence de l'effacement des charges du point brillant sur la rétine. Le signal SR est appliqué via une porte ET 34 à un monostable 35 par exemple pour former l'impulsion de déblocage SAP (figure 5-f) de largeur désirée; la porte 34 autorise un fonctionnement éventuel à la cadence ligne. Le circuit mélangeur 24 des signaux SAP et SB peut être réalisé par un amplificateur opérationnel monté en additionneur comme figuré et qui délivre le signal combiné SA sur l'électrode de contrôle du tube.

Le signal de sortie SC du comparateur 20 alimente selon une deuxième voie les circuits destinés à élaborer les signaux SXP et SYP correspondant au balayage du point brillant. Ces circuits comportent en premier lieu in montage détecteur crête avec une diode d'entrée 40 qui débite dans une mémoire capacitive C1 en série avec une résistance R1. La mémoire est remise à zéro par un court-circuit 41 commandé à la fréquence trame par le signal ST. La tension aux bornes de R1 est comparée à un seuil dans le circuit 42 du type comparateur à sortie numérique en sorte de produire le signal sous forme d'impulsions S1 dont les flancs arrières (figure 5-b) correspondent temporellement aux valeurs crêtes croissantes successives du signal SC (figure 5-a). On se rend compte que le flanc arrière de la dernière impulsion S1 se produit sur la ligne de balayage qui passe par le niveau crête maximal de la zone TS et à l'instant t1 correspondant. Il est donc possible de déterminer les coordonnées du point brillant P. Le signal S1 formé d'impulsions de différentes largeurs est appliqué à un monostable 43 déclenché par le front descendant des impulsions S1 successives. Un compteur 44 reçoit un signal d'horloge HP à la fréquence point et est remis à zéro par le signal SL à la cadence ligne, il effectue un comptage des points successifs de la ligne en cours de balayage. Le décompte des points est transféré dans la mémoire 45 à chaque réception d'impulsion S2 provenant du monostable 43, c'est-à-dire à chaque front descendant du signal S1. Une seconde mémoire 46 est commandée en fin de trame par le signal ST pour stocker la dernière infornmation présente dans la mémoire 45, cette information correspondant au rang du point qui coïncide avec la dernière impulsion S1, c'est-à-dire à l'instant t1 de détection crête maximale qui traduit la distance L/2—XP (figure 2). L'information T/2—YP est obtenue de façon analogue par les circuits 47, 48, 49, le compteur 47 effectuant un comptage des lignes successives du balayage image en cours. Les informations mémorisées en 46 et 49 sont converties en analogique repectivement dans les circuis convertisseurs 50 et 51, avec un facteur de conversion approprié pour introduire le coefficient de multiplication ou de gain utile à ce niveau. Les sorties S3 et S4 des convertisseurs sont traitées par sommation respectivement en 52 et 53 avant d'être appliquées aux amplificateurs de puissance 9X de la voie horizontale et 9Y de la voie verticale. La sommation a pour but de ramener les valeurs de déviation par rapport au point O de référence, les tensions VoL et VoT indiquées correspondent aux valeurs L/2 et T/2. La sommation s'effectue avec le signal convenable pour produire les signaux SXP et SYP désirés. Le mélange de ces signaux avec ceux SX et SY du balayage TV, est produit par les circuits commutateurs 25X et 25Y déclenchés par le signal de blocage ligne SBL. A chaque période de blocage TRL les voies SXP, SYP sont transmises vers les amplificateurs 9X, 9Y et inversement, durant la période d'allumage restant TL—TRL ce cont les signaux SX et SY qui sont transmis. Le balayage du point brillant a lieu durant le retour ligne si l'impulsion SAP est présente dans le signal SA appliqué au wehnelt.

Le dispositif auti-éblouissement décrit permet ainsi de venir décharger la rétine à l'endroit du point brillant détecté; la modification locale de sensibilité qui en résulte permet d'éviter un effet d'éblouissement. L'exemple de réalisation figure 4 a été donné à titre indicatif étant entendu que d'autres modes ou variantes de réalisation peuvent être envisagés répondant aux caractéristiques de l'invention.

## Revendications

1. Dispositif anti-éblouissement pour une caméra de télévision qui comporte un tube de prise de vues (4) délivrant le signal vidéo, des circuits de balayage (8) élaborant des signaux de déflexion en X et en Y du balayage ligne par ligne, un générateur (7) du signal de blocage du faisceau pendant les retours de ligne et trame, et un circuit (6) générateur des signaux de synchronisation ligne et trame, le dispositif anti-éblouissement étant constitué par un circuit bouclé comportant des moyens de détection (20) de la vidéo due à un point brillant, par comparaison du signal vidéo à un seuil déterminé en fonction du niveau de saturation, le résultat de comparaison étant appliqué à des moyens générateurs (21) d'un signal de déblocage (SAP) appliqué à la grille de contrôle du tube pendant le retour ligne, et produisant ce signal avec une fréquence variable en fonction de la luminosité du point brillant, le dispositif étant caractérisé en ce que le tube étant un tube de prise de vues á canon à électrons comportant une cathode une grille de contrôle et une grille d'accélération, le
résultat de comparaison est appliqué d'autre part, à des moyens générateurs (22—23) de signaux de déflexion (SXP, SYP) correspondant à la localisation en X et en Y du point brillant, et des moyens mélangeurs (24—25) sont prévus pour permettre l'application desdits signaux de déflexion et de déblocage relatifs au point brillant durant des périodes de retour ligne.

2. Dispositif selon la revendication 1, caractérisé en ce que les moyens mélangeurs comportent un circuit mélangeur (24) pour combiner le signal de blocage (SB) et celui éventuel de déblocage point brillant (SAP) sous forme d'un unique signal (SA) de commande, et des circuits d'aiguillage (25) pour alimenter les organes de déflexion (3) à partir des circuits de balayage (8) en dehors des retours ligne et, à partir du générateur de déflexion point brillant durant les retours ligne.

3. Dispositif selon la revendication 2, caractérisé en ce que les circuits d'aiguillage comportent un premier circuit (25X) sur la voie de déflexion horizontale en X, un deuxième circuit (25Y) sur la voie de déflexion verticale en Y, chacun d'eux comportant deux interrupteurs en opposition d'état commandés par le signal de blocage ligne (SBL).

4. Dispositif selon l'une quelconque des revendications 1 à 3, caractérisé en ce que les moyens générateurs des signaux de déflexion du point brillant (22—23) comportent un circuit de détection crête (40 à 43, C1, R1) du résultat de comparaison pour détecter les niveaux crêtes successifs croissants, des circuits de comptage (44, 47) points et lignes respectivement suivis de circuits mémoire (45—46, 48—49) pour mémoriser les données de localisation du niveau crête maximal du balayage image en cours, et des circuits de conversion numérique-analogique (50—51) de ces données.

5. Dispositif selon la revendication 4, caractérisé en ce que le circuit de détection crête comporte une diode (40) connectée à un circuit capacité et résistance en série, un comparateur (42) à un seuil de la tension aux bornes de la résistance, et un circuit monostable (43) en sortie du comparateur.

6. Dispositif selon la revendication 5, caractérisé en ce que chaque compteur est suivi d'une première mémoire (45—48) adressée par la sortie du circuit monostable (43), puis d'une deuxième mémoire (46—49) adressée par le signal de synchronisation trame pour prélever la dernière donnée stockée dans la première mémoire au cours du balayage considéré.

7. Dispositif selon l'une quelconque des revendications précédentes, caractérisé en ce que les moyens générateurs de signal de déblocage comportent successivement un circuit monostable (30) recevant le résultat de comparaison (SC), un circuit compteur (31) remis à zéro à la cadence trame, une mémoire morte (32), un circuit diviseur programmable (33) programmé par la sortie mémoire morte et effectuant un comptage différentiel à la fréquence ligne, et un circuit monostable (35) délivrant l'impulsion de déblocage point brillant (SAP).

8. Système de guidage de missile pat télévision dont la caméra est équipée d'un dispositif antiéblouissement selon l'une quelconque des revendications 1 à 7.

**Patentansprüche**

1. Blendschutzvorrichtung für eine Fernsehkamera, die eine Bildaufnahmeröhre (4) umfaßt, welche das Videosignal abgibt, Ablenkschaltungen (8) enthält, welche Ablenksignale für die Richtungen X und Y der zeilenweise erfolgenden Ablenkung erzeugen, einen Generator (7) zur Erzeugung des Austastsignals des Bündels während des Zeilen- und Bildrücklaufs sowie eine Schaltung (6) zur Erzeugung der Zeilen- und Bild-Synchronisationssignale enthält, wobei die Blendschutzvorrichtung gebildet ist aus einer geschleiften Schaltung, welche Mittel (20) zur Detektion des auf einem hellen Punkt beruhenden Videosignals durch Vergleich des Videosignals mit einem Schwellwert umfaßt, der in Abhängigkeit von dem Sättigungspegel bestimmt ist, wobei das Vergleichsergebnis an Generatormittel (21) angelegt ist, die ein Freigabesignal (SAP) erzeugen, welches an das Steuergitter der Röhre während des Zeilenrücklaufs angelegt ist, und dieses Signal mit einer Frequenz erzeugen, die in Abhängigkeit von der Helligkeit des hellen Punktes variabel ist, wobei die Vorrichtung dadurch gekennzeichnet ist, daß die Röhre eine Bildaufnahmeröhre mit einer Elektronenkanone ist, die eine Kathode, ein Steuergitter und ein Beschleunigungsgitter umfaßt, wobei das Vergleichsergebnis andererseits am Generatormittel (22—23) zur Erzeugung von Ablenksignalen (SXP, SYP) angelegt ist, welche dem X-Wert und dem Y-Wert der Lage des hellen Punktes entsprechen, und wobei Mischmittel (24—25) vorgesehen sind, um das Anlegen der genannten Ablenk- und Freigabesignale, die den hellen Punkt betreffen, während der Zeilenrücklaufperioden zu ermöglichen.

2. Vorrichtung nach Anspruch 1, dadurch gekennzeichnet, daß die Mischmittel eine Mischschaltung (24) zum Kombinieren des Freigabesignals (SB) und des eventuellen Freigabesignals des hellen Punktes (SAP) in Form eines einzigen Steuersignals (SA) sowie Umlenkschaltungen (25) umfassen, um die Ablenkorgane (3) außerhalb der Zeilenrückläufe aus den Ablenkschaltungen (8) und während der Zeilenrückläufe aus dem Ablenkgenerator für den hellen Punkt zu speisen.

3. Vorrichtung nach Anspruch 2, dadurch gekennzeichnet, daß die Umlenkschaltungen eine erste Schaltung (25X) auf dem waagerechten Ablenkweg in X-Richtung und eine zweite Schaltung (25Y) auf dem senkrechten Ablenkweg in Y-Richtung umfassen, wobei jede von ihnen zwei Unterbrecher umfaßt, deren Zustände entgegengesetzt sind und die durch das Zeilen-Sperrsignal (SBL) gesteuert werden.

4. Vorrichtung nach einem der Ansprüche 1 bis 3, dadurch gekennzeichnet, daß die Generatormittel (22—23) zur Erzeugung der Ablenksignale für den hellen Punkt eine Spitzenwert-Detektionsschaltung (40—43, C1, R1) für das Vergleichsergebnis umfassen, um die aufeinanderfolgenden zunehmenden Spitzenwerte zu erfassen, Punkt- und Zeilen-Zählschaltungen (44, 47) umfassen, auf die jeweils Speicherschaltungen (45—46, 48—49) folgen, um die Daten für die Lage des maximalen Spitzenpegels der laufenden Bildablenkung zu speichern, sowie Schaltungen (50—51) zur Digital-Analog-Umsetzung dieser Daten umfassen.

5. Vorrichtung nach Anspruch 4, dadurch gekennzeichnet, daß die Spitzenwert-Detektionsschaltung eine Diode (40), welche an eine Schaltung mit einer Kapazität in Reihe mit einem Widerstand angeschlossen ist, einen Vergleicher (42) zum Vergleichen der Spannung an den Anschlüssen des Widerstandes mit einem Schwellwert und eine monostabile Schaltung (43) am Ausgang des Vergleichers umfaßt.

6. Vorrichtung nach Anspruch 5, dadurch gekennzeichnet, daß auf jeden Zähler ein erster Speicher (45—48) folgt, der durch den Ausgang der monostabilen Schaltung (43) adressiert wird, und ein zweiter Speicher (46—49) folgt, der durch das Bild-Synchronisationssignal adressiert wird, um den letzten Datenwert zu entnehmen, der in dem ersten Speicher während der betrachteten Ablenkung gespeichert wurde.

7. Vorrichtung nach einem der vorstehenden Ansprüche, dadurch gekennzeichnet, daß die Generatormittel zur Erzeugung des Freigabesignals aufeinanderfolgend eine monostabile Schaltung (30), welche das Vergleichsergebnis (SC) empfängt, eine Zählschaltung (31), die im Bildrhythmus auf Null zurückgesetzt wird, einen Festwertspeicher (32), eine programmierbare Teilerschaltung (33), die durch den Ausgang des Festwertspeichers programmiert wird und eine differentielle Zählung mit der Zeilenfrequenz durchführt, und eine monostabile Schaltung (35), welche den Freigabeimpuls für den hellen Punkt (SAP) abgibt, umfassen.

8. System zur Leitung von Raketen über Fernsehen, dessen Kamera mit einer Blendschutzvorrichtung nach einem der Ansprüche 1 bis 7 ausgestattet ist.

**Claims**

1. Antidazzle device for a television camera which comprises an image camera tube (4) which furnishes the video signal, scanning circuits (8) which generate scanning signals for the directions X and Y of the line scanning, a generator (7) for producing the beam blanking signal during the line and frame flyback, and a generating circuit (6) for producing line and frame synchronizing signals, the antidazzle device being constituted by a looped circuit comprising means (20) for detecting the video signal due to a bright spot by comparison of the video signal with a threshold vlaue determined in dependence upon the saturation level, the comparison result being applied to generating means (21) for producing an enabling signal (SAP) applied to the control grid of the tube during the line flyback, and producing said signal with a frequency variable in dependence upon the brightness of the bright spot, the device being characterized in that the tube is an image camera tube with electron gun comprising a cathode, a control grid and an acceleration grid, the comparison result being applied on the other hand to generator means (22—23) for producing scanning signals (SXP, SYO) corresponding to the localization in X and Y of the bright spot, and mixing means (24—25) are provided for permitting the application of said scanning and enabling signals relating to the bright spot during the line flyback periods.

2. Device according to Claim 1, characterized in that the mixing means comprise a mixing circuit (24) for combining the blanking signal (SB) and the possible enabling signal of the bright spot (SAP) in the form of a single control signal (SA) and deflectixon circuits (25) for supplying the deflectors (3) outside the line flybacks from the scanning circuits (8) and during the line flybacks from the scanning generator for the bright spot.

3. Device according to Claim 2, characterized in that the deflection circuits include a first circuit (25X) on the horizontal scanning path in X, a second circuit (25Y) on the vertical scanning path in Y, each of them including two interrupters whose states are in opposition, which are controlled by the line blanking signal (SBL).

4. Device according to any one of Claims 1 to 3, characterized in that the generating means for producing the scanning signals of the bright spot (22—23) include a peak value detection circuit (40—43, C1, R1) for the comparison result for detecting the successive increasing peak values, dot and line counting circuits (44, 47) respectively followed by memory circuits (45—46, 48—49) for storing the data of the location of the maximum peak level of the image scan in progress, and circuits (50—51) for the digital-analog conversion of said data.

5. Device according to Claim 4, characterized in that the peak detection circuit includes a diode (40) connected to a circuit having a capacitance and resistance in series, a comparator (42) for comparing the voltage at the terminals of the resistance with a threshold value and a monostable circuit (43) at the output of the comparator.

6. Device according to Claim 5, characterized in that each counter is followed by a first memory (54—48) addressed by the output of the monostable circuit (43) and then a second memory (46—49) addressed by the frame synchronizing signal for withdrawing the last data value stored in the first memory during the scanning considered.

7. Device according to any one of the preceding claims, characterized in that the generator means for generating the enabling signal comprises successively a monostable circuit (30) receiving the comparison result (SC), a counting circuit (31) reset to zero in the frame rhythm, a read only memory (32), a programmable divider circuit (33) programmed by the output of the read only memory and effecting a differential counting at the line frequency, and a monostable circuit (35) furnishing the bright spot enabling pulse (SAP).

8. System for guiding missiles by television of which the camera is equipped with an antidazzle device according to any one of Claims 1 to 7.

FIG. 1

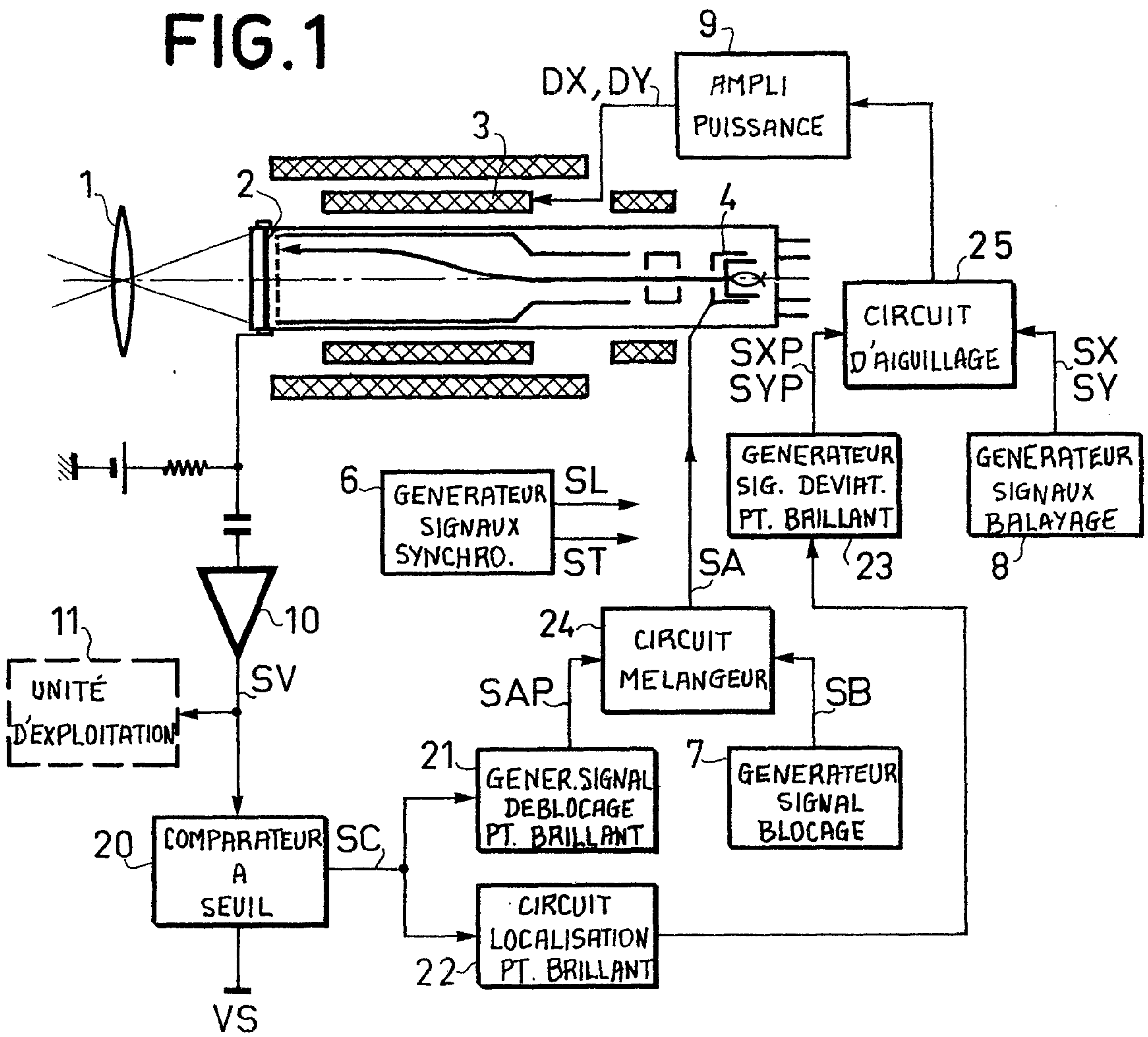
9
AMPLI
PUISSANCE
DX, DY
3
1
2
4
25
CIRCUIT
D'AIGUILLAGE
SXP
SYP
SX
SY
GENERATEUR
SIG. DEVIAT.
PT. BRILLANT
23
GENERATEUR
SIGNAUX
BALAYAGE
8
6
GENERATEUR
SIGNAUX
SYNCHRO.
SL
ST
SA
24
CIRCUIT
MELANGEUR
SAP
SB
10
11
UNITÉ
D'EXPLOITATION
SV
21
GENER. SIGNAL
DEBLOCAGE
PT. BRILLANT
7
GENERATEUR
SIGNAL
BLOCAGE
20
COMPARATEUR
A
SEUIL
SC
CIRCUIT
LOCALISATION
PT. BRILLANT
22
VS

FIG. 2

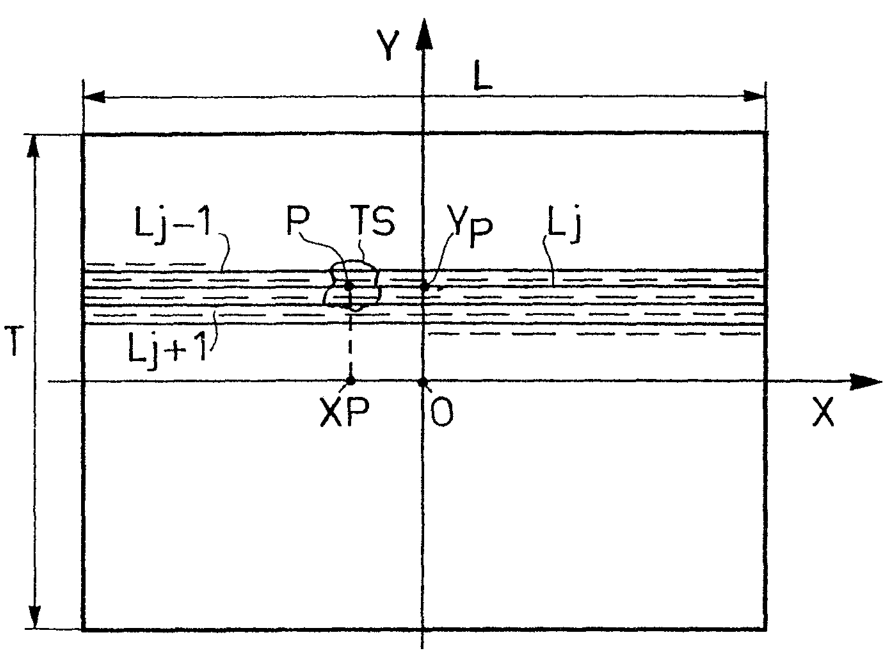
Y
L
T
Lj-1
P
TS
YP
Lj
Lj+1
XP
O
X

FIG. 3

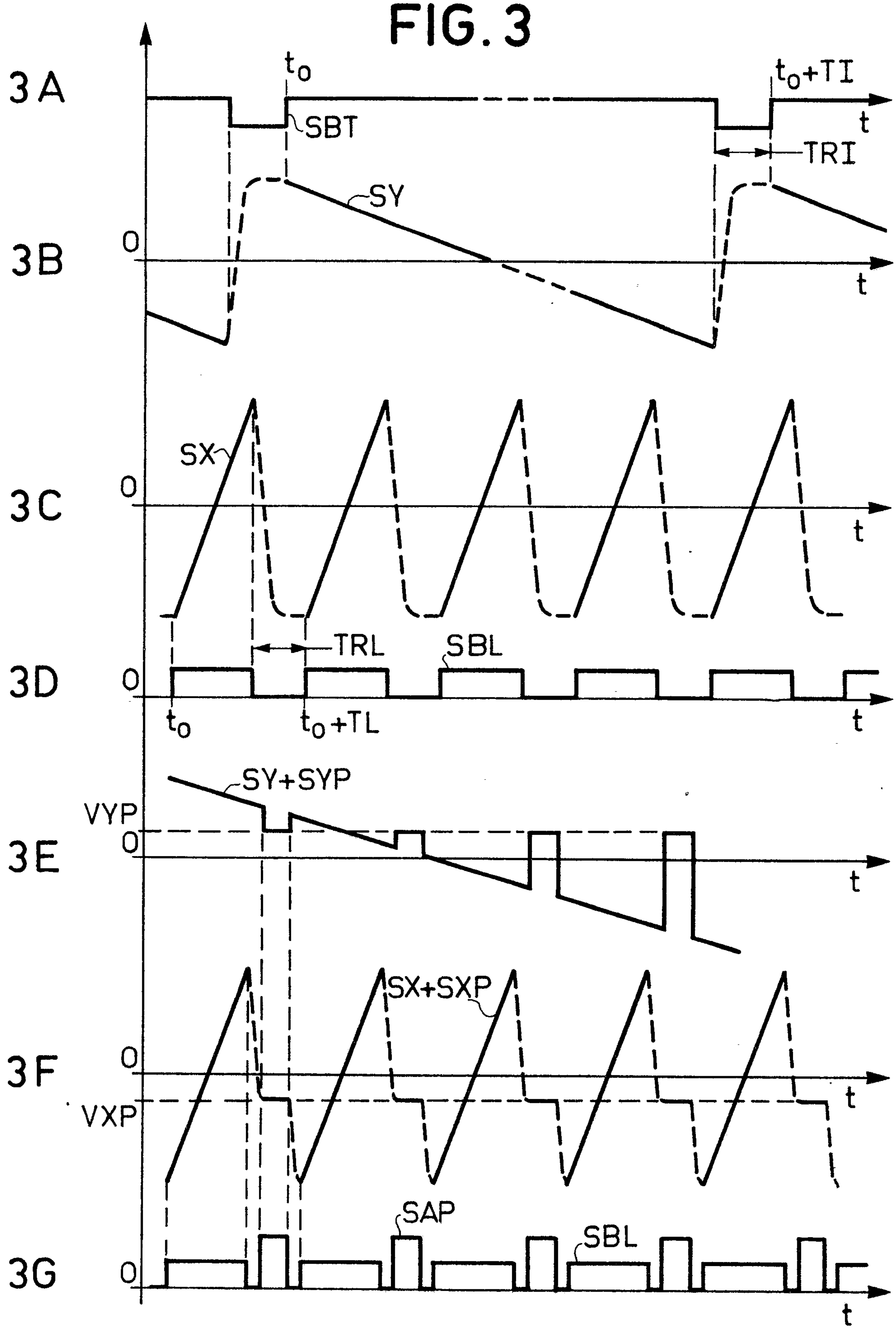
3A
$t_o$
$t_o$+TI
SBT
t
TRI
SY
3B
0
t
SX
3C
0
t
TRL
SBL
3D
0
$t_o$
$t_o$+TL
t
SY+SYP
VYP
0
3E
t
SX+SXP
3F
0
t
VXP
SAP
SBL
3G
0
t

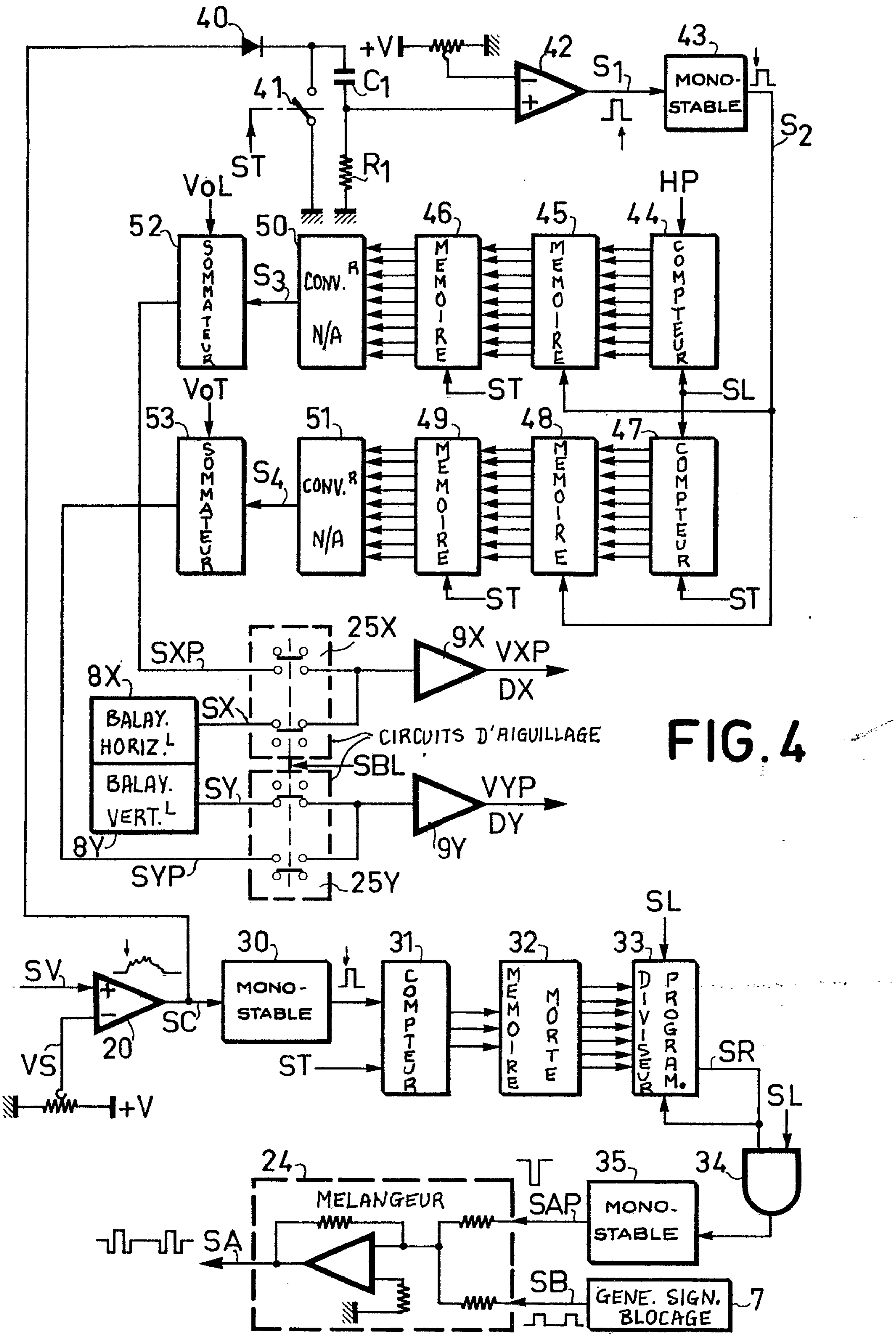
40
+V
42
43
MONO-STABLE
41
C1
S1
S2
ST
R1
VoL
HP
52
50
46
45
44
SOMMATEUR
S3
CONV.R N/A
MEMOIRE
MEMOIRE
COMPTEUR
ST
SL
VoT
53
51
49
48
47
SOMMATEUR
S4
CONV.R N/A
MEMOIRE
MEMOIRE
COMPTEUR
ST
ST
25X
9X
VXP
DX
SXP
8X
BALAY. HORIZ.L
SX
CIRCUITS D'AIGUILLAGE
SBL
BALAY. VERT.L
SY
VYP
DY
8Y
9Y
SYP
25Y
SL
30
31
32
33
SV
MONO-STABLE
COMPTEUR
MEMOIRE MORTE
DIVISEUR PROGRAM.
SC
20
ST
VS
+V
SR
SL
24
35
34
MELANGEUR
SAP
MONO-STABLE
SA
SB
GENE. SIGN. BLOCAGE
7

FIG. 4

FIG. 5